# EUROPÄISCHE PATENTSCHRIFT

(11) **EP 3 770 633 B1**
(45) Veröffentlichungstag und Bekanntmachung des Hinweises auf die Patenterteilung: **05.05.2021**
(21) Anmeldenummer: 19187705.9
(22) Anmeldetag: 23.07.2019
(51) Int. Cl.: G01S 7/487, G01S 17/10, G01S 7/4865, G01S 7/497, G01S 7/481

(54) **OPTOELEKTRONISCHER SENSOR UND VERFAHREN ZUR ABSTANDSBESTIMMUNG**
OPTOELECTRONIC SENSOR AND DISTANCE MEASUREMENT METHOD
CAPTEUR OPTOÉLECTRONIQUE ET PROCÉDÉ DE DÉTERMINATION DE DISTANCE

(43) Veröffentlichungstag der Anmeldung: 27.01.2021
(73) Patentinhaber: SICK AG, 79183 Waldkirch (DE)
(72) Erfinder: Clemens, Klaus, 79367 Weisweil (DE); Gimpel, Dr. Hartmut, 79194 Gundelfingen (DE); Marra, Martin, 79280 Au (DE); Jägel, Matthias, 79104 Freiburg (DE)

(56) Entgegenhaltungen:
- EP-A2- 1 972 961
- US-A1- 2003 218 919
- US-A1- 2012 320 363

## Beschreibung

Die Erfindung betrifft einen optoelektronischen Sensor und ein Verfahren zur Erfassung und Abstandsbestimmung eines Objekts in einem Überwachungsbereich nach dem Oberbegriff von Anspruch 1 beziehungsweise 13.

Bei optoelektronischen Sensoren zur Abstandsbestimmung nach dem Prinzip des Lichtlaufzeitverfahrens werden Lichtsignale ausgesandt, und die Zeit bis zum Empfang der an Objekten remittierten oder reflektierten Lichtsignale wird gemessen. Optoelektronische Entfernungsmessung kann beispielsweise in der Fahrzeugsicherheit, der Logistik- oder Fabrikautomatisierung oder der Sicherheitstechnik benötigt werden. Meist ist die gesuchte Ausgabegröße der gemessene Abstand.

Das Lichtlaufzeitverfahren ist auch das Prinzip, nach dem entfernungsmessende Laserscanner arbeiten, die eine Überwachungsebene oder sogar einen dreidimensionalen Raumbereich abtasten. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. In den meisten Laserscannern wird die Abtastbewegung durch einen Drehspiegel oder ein Polygonspiegelrad erreicht. Stattdessen rotiert in einigen Laserscannern wie etwa demjenigen nach DE 197 57 849 B4 der gesamten Messkopf mit Lichtsendern und Lichtempfängern. Bei diesem Laserscannerprinzip ist es auch möglich, mehrere Abtaststrahlen rotieren zu lassen.

Beispielsweise aus EP 1 972 961 A2 ist ein Laufzeitverfahren bekannt, das anstelle einer Einzelpulsauswertung eine Vielzahl von Einzelmessungen mit jeweils einem Sendepuls durchführt und die jeweiligen Empfangssignale in einem Histogramm aufaddiert. Durch diese statistische Auswertung addiert sich das Nutzsignal, während zufällige Rauscheinflüsse ausgemittelt werden, so dass das Signal-Rausch-Verhältnis deutlich verbessert wird. Eine Besonderheit des Verfahrens ist, dass verschiedene Maßnahmen getroffen werden, um diese komplexere Auswertung auf besonders kostengünstiger Hardware durchführen zu können. Dazu zählt, dass anstelle eines aufwändigen schnellen A/D-Wandlers lediglich ein Null-Schwellen-Komparator eingesetzt wird, der das Einzelsignal mit nur 1-Bit-Auflösung digitalisiert, also binarisiert. Ein solches Verfahren, das eine Vielzahl von Einzelmessungen zu einer Abstandsmessung kombiniert, wird als Pulsmittelungsverfahren bezeichnet.

Speziell in der Sicherheitstechnik werden sichere Laserscanner eingesetzt, die konfigurierbare Schutzfelder auf unzulässige Eingriffe überwachen. Sichere Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen. In einem Sicherheitslaserscanner werden üblicherweise Pulsverfahren oder auch Pulsmittelungsverfahren eingesetzt.

Die Genauigkeit der Entfernungsmessung hängt entscheidend davon ab, wie gut der Empfangszeitpunkt bestimmt werden kann. Herkömmliche Pulsverfahren senden einen Lichtpuls und bestimmen die Lage des daraufhin empfangenen Lichtpulses. Soll nicht das gesamte Empfangssignal hochaufgelöst digitalisiert werden, was einigen Aufwand erfordert, so wird meist eine analoge Schwelle verwendet, um den empfangenen Lichtpuls von dem Hintergrundrauschen zu trennen und so dessen Empfangszeitpunkt aufzufinden. Selbst das Abtasten des Empfangssignals mit einem Mehr-Bit-Wandler lässt sich als Bewertung mit mehreren analogen Schwellen auffassen.

Dabei sind viele Varianten bekannt, wie diese analoge Schwelle festgelegt wird und wie der Schwellenvergleich zur Auswertung beiträgt. In der oben genannten EP 1 972 961 A2 liegt die Schwelle nahe bei Null und damit mitten im Rauschband. Es gibt also sehr viele Zeitpunkte mit überschwelligem Empfangssignal allein durch das Rauschen. Die EP 2 942 645 A1 oder EP 2 942 644 A1 nutzen zwei oder einige wenige Schwellen, um den Schwellenübergang besser zeitlich zu lokalisieren und das Verhältnis zwischen Fremdlichtereignissen und Nutzlichtereignissen einzustellen. In allen diesen Fällen wird das Empfangssignal binarisiert oder mit wenigen Bit digitalisiert und der Empfangszeitpunkt erst nachgelagert in einer digitalen statistischen Auswertung von mehreren Einzelmessungen bestimmt. Der Schwellenvergleich findet in einem Komparator oder integriert in einen Auswertungsbaustein statt, wie in FPGA (Field Programmable Gate Array).

Bei einem Einzelpulsverfahren oder einer Lichtlaufzeitmessung mit einem TDC bestimmen die Zeitpunkte von Schwellenübergängen direkt den Empfangszeitpunkt, so dass hier die Schwelle sehr viel höher liegt, um dem Rauschen auszuweichen. Es ist auch bekannt, nicht nur die erste Schwellenüberschreitung und damit die steigende Flanke des empfangenen Lichtpulses auszuwerten, sondern auch das erneute Abfallen unter die Schwelle und damit die fallende Flanke. Dadurch wird die zeitliche Lokalisierung unabhängiger vom Empfangspegel.

Die Stärke des Rauschens hängt von der aktuellen Fremdlichtmenge am Abtastpunkt des optoelektronischen Sensors ab. Bei einem Laserscanner kann das durch die schnelle Strahlbewegung stark variieren. Die Schwelle wird bisher so gelegt, dass sie einen Kompromiss für die erwartete Variation des Rauschens bildet. Auch eine Anpassung der Schwelle ist bekannt. Solche Anpassungen gehe aber nicht ausreichend auf das aktuelle Rauschverhalten ein, und sie sind insbesondere für Laserscanner zu langsam.

So wäre prinzipiell ein Regelkreis vorstellbar, der misst, wie oft die bisherige Schwelle allein durch Rauscheffekte übertroffen wird, also zu Zeiten ohne Empfang eines Lichtpulses. Gerade bei einer hohen Schwelle, die selektiv auf empfangene Lichtpulse reagieren soll, ist aber eine Schwellüberschreitung allein durch Rauschen ein seltenes oder sogar per Design nach Möglichkeit ganz vermiedenes Ereignis. Ein solcher Regelkreis könnte sich also nur ganz langsam oder gar nicht anpassen. Eine Verbesserung ließe sich dadurch erzielen, dass der Regelkreis einen zweiten Komparator mit einer zweiten niedrigeren Schwelle aufweist, die nicht zu der eigentlichen Entfernungsmessung beiträgt, sondern lediglich häufigere Rauschereignisse registrieren soll, um den aktuellen Rauschpegel etwas schneller bestimmen zu können. Das beschleunigt die Anpassung, aber immer noch nicht in ausreichendem Maße. Hinzu kommen bei jeglichen Ansätzen mit Regelkreisen schaltungsbedingte Beschränkungen der Anpassungsgeschwindigkeit, die allenfalls durch sehr teure Hardwarebausteine überwunden werden könnten.

Eine nur langsame Anpassung der Schwelle verbessert die Situation insbesondere in einem Laserscanner allenfalls geringfügig. Die Schwelle entspricht dann jeweils nur den Verhältnissen, die an früheren Abtastpunkten herrschten. Für die jeweils aktuelle Abtastung können sich diese Verhältnisse geändert haben, und das auch deutlich. Der Laserscanner hinkt in seiner Anpassung ständig hinterher, die dadurch sogar kontraproduktiv gegenüber einer sorgfältig an die erwarteten Extreme angepassten fixen Schwelle werden kann.

Aus der noch unveröffentlichten Anmeldung mit dem Aktenzeichen DE 10 2018 109 014 ist ein mit einem Pulsmittelungsverfahren abstandsmessender optoelektronischer Sensor bekannt, der mit einer hohen Schwelle und einer niedrigen Schwelle arbeitet. Die eigentliche Abstandsmessung beruht wie in der EP 1 972 961 A2 auf dem mit der niedrigen Schwelle binarisierten Empfangssignal. Die hohe Schwelle dient der Datenreduktion, indem nur Zeitabschnitte des Empfangssignals gespeichert werden, für welche die hohe Schwelle tatsächlich den Empfang eines Lichtpulses signalisiert. Die hohe Schwelle kann dynamisch an die erwartete Objektentfernung angepasst werden, ohne dass konkrete schaltungstechnische Maßnahmen dafür angegeben werden.

Die DE 10 2018 209 572 A1 offenbart eine Entfernungsmessvorrichtung mit einem Komparator für einen Schwellenwertvergleich, dessen Schwelle mit einem Maximalwertdetektor angepasst wird. Das ergibt aber eine nur einseitige und zudem wiederum zu langsame Anpassung.

Die US 2012/0320363 A1 befasst sich mit der Bestimmung von Schwellen zum Filtern von Rauschen in LADAR-Daten. Dabei werden eine Gesamtschwelle für die gesamte Szene anhand einer Binomialverteilung und Schwellen je x-y-Position bestimmt. Die zugrundeliegende Rauschdichte wird durch Zählen von Empfangsereignissen in einem Teilvolumen ermittelt, von dem bekannt ist, dass dort nur Rauschen auftritt und kein Messlicht von Objekten zurückkehrt.

Aus der US 2003/0218919 A1 ist ein Laserscanner bekannt, der benachbarte Abtastungen zusammenfasst, wenn ansonsten kein überschwelliges Empfangssignal erfasst würde. Zusätzlich werden drei verschiedene Möglichkeiten zur Anpassung der Schwelle diskutiert. Die erste Möglichkeit passt sich daran an, wie oft die genannten Zusammenfassungen benachbarter Abtastungen erforderlich sind. Die zweite Möglichkeit wertet das jeweilige Empfangssignal aus, während die dritte Möglichkeit dabei zudem kein Licht aussendet, um reines Rauschen zu empfangen.

Es ist daher Aufgabe der Erfindung, die Abstandsmessung mit einem pulsbasierten Lichtlaufzeitverfahren zu verbessern.

Diese Aufgabe wird durch einen optoelektronischen Sensor und ein Verfahren zur Erfassung und Abstandsbestimmung eines Objekts in einem Überwachungsbereich nach Anspruch 1 beziehungsweise 13 gelöst. Der Sensor sendet mindestens einen Lichtpuls aus und empfängt ihn nach Remission oder Reflektion an dem Objekt wieder, um mit einem pulsbasierten Lichtlaufzeitverfahren den Abstand zu bestimmen. Das entsprechende Empfangssignal wird dabei in einem analogen Schwellenvergleicher mit einer analogen Schwelle bewertet, um den empfangenen Lichtpuls zu detektieren und insbesondere zeitlich zu lokalisieren. Die Schwellenbewertung kann dazu dienen, ein digitales und insbesondere binäres Signal für eine nachgelagerte digitale Auswertung zum Auffinden eines Empfangszeitpunkts oder direkt Zeitpunkte für den Empfangszeitpunkt des empfangenen Lichtpulses zu erzeugen. Denkbar ist auch nur eine Art Filterung, welche Zeitabschnitte für eine eigentliche Messauswertung relevant sind, so wie dies in der einleitend genannten DE 10 2018 109 014 beschrieben ist.

Die Erfindung geht von dem Grundgedanken aus, die analoge Schwelle an ein im Empfangskreis bestimmtes Rauschen anzupassen. Dabei soll insbesondere die Schwelle bei hoher Fremdlichtbelastung nach oben und entsprechend bei geringer Fremdlichtbelastung nach unten angepasst werden. Die Anpassung erfolgt damit in der Weise, dass die Häufigkeit, mit der das Empfangssignal die Schwelle überschreitet, möglichst unabhängig vom Rauschpegel wird, oder zumindest soll die Tendenz, dass diese Häufigkeit vom Rauschpegel abhängt, abgeschwächt werden.

Die Erfindung hat den Vorteil, dass der Wert der rauschangepassten analogen Schwelle ausreichend schnell den jeweiligen aktuellen Fremdlichtgegebenheiten entspricht. Die Wahrscheinlichkeit, dass statt des empfangenen Lichtpulses das Rauschen eine Schwellenüberschreitung verursacht, ist damit in allen Fremdlichtsituationen gleich oder zumindest ähnlich. Dadurch ergibt sich eine Verbesserung der Messgenauigkeit beziehungsweise der Messreichweite, jedenfalls für alle diejenigen Messungen, die nicht unter maximalem Fremdlicht erfolgen. Denn eine feste analoge Schwelle müsste so gelegt werden, dass sie den schlechtesten Fall maximalen Fremdlichts abdeckt und dabei noch die geforderte Fehldetektionswahrscheinlichkeit einhält. Bei weniger extremen Messsituationen mit weniger Fremdlicht würde daher Messgenauigkeit beziehungsweise Messreichweite verschenkt. Die erfindungsgemäße schnelle Anpassung der analogen Schwelle nutzt dagegen dieses Potential aus.

Der Sensor ist bevorzugt als Laserscanner zur Abtastung des Überwachungsbereichs ausgebildet und weist dafür eine bewegliche Ablenkeinheit zur periodischen Ablenkung der ausgesandten Lichtpulse auf. Die Ablenkeinheit lenkt die Lichtpulse im Verlauf der Abtastbewegung in die unterschiedlichen Abtastrichtungen. Der Laserscanner kann alle bekannten Bauformen aufweisen, insbesondere mit Drehspiegel oder drehbarem Messkopf, mit variabler Elevation oder mehreren Abtaststrahlen. In einem Laserscanner ist die Variabilität des jeweiligen Fremdlichts und damit des Rauschens durch die ständige und sehr schnelle Veränderung des Messortes besonders groß, und deshalb ist die erfindungsgemäße schnelle Rauschanpassung der analogen Schwelle besonders vorteilhaft.

Die Schwellenanpassungseinheit ist bevorzugt dafür ausgebildet, die analoge Schwelle schneller anzupassen als eine Messwiederholungsperiode des Sensors. Damit ist die analoge Schwelle für die nächste Messung richtig gesetzt. Bei einem Pulsmittelungsverfahren ist vorzugsweise die Messwiederholungsperiode der Einzelmessung gemeint. Bei einem Laserscanner entspricht das dem nächsten Winkelschritt, wobei angenommen werden darf, dass die Rauschverhältnisse in so enger Nachbarschaft zumindest noch sehr ähnlich sind. Vorzugsweise erfolgt die Anpassung sogar schon während einer Messung, ist also sogar schneller als ein Bruchteil einer Messwiederholungsperiode: Ist der aktuelle Objektabstand nicht zu klein, so gelingt die Anpassung womöglich schon, ehe der ausgesandte Lichtpuls wieder zurückgekehrt ist. Herkömmliche Schwellenanpassungen, die auch ohnehin gar nicht auf den Rauschpegel abstellen, erreichen so kurze Anpassungszeiten nicht.

Die Schwellenanpassungseinheit ist bevorzugt dafür ausgebildet, die analoge Schwelle nach spätestens einigen Mikrosekunden, also höchstens zehn, insbesondere höchstens fünf, vier, drei oder zwei, oder spätestens einer Mikrosekunde anzupassen. Das ist eine alternative oder ergänzende Quantifizierung in absoluten Einheiten zu einem Bezug auf eine Messwiederholungsperiode. Eine typische Größenordnung für eine Abstandsmessung mit einem Laserscanner ist 100 µs, so dass mit diesen absoluten Zeitangaben die Anforderung erfüllt ist, schneller anzupassen als in einer Messwiederholungsperiode, sogar schneller als ein kleiner Bruchteil davon.

Die Schwellenanpassungseinheit ist bevorzugt dafür ausgebildet, die analoge Schwelle so hoch zu legen, dass das Empfangssignal zu höchstens 10%, insbesondere zu höchstens 5%, 1%, 0,5% oder 0,1% oberhalb der analogen Schwelle liegt. Die analoge Schwelle ist also groß gegen Null und wird nur zu einem entsprechend geringen Prozentsatz der Zeiten übertroffen, bei Binarisierung oder Digitalisierung nur bei dem kleinen Prozentsatz der Abtastzeitpunkte. Bildlich gesprochen soll die analoge Schwelle oberhalb des Rauschbandes liegen und nur durch das Nutzsignal des empfangenen Lichtpulses übertroffen werden, tatsächlich ist das Rauschband nicht scharf begrenzt, so dass sich dies beispielsweise durch Vielfache der Standardabweichung des Rauschens wie eine nσ-Umgebung mit n≥3 ausdrücken und erreichen lässt. Dabei ist zu beachten, dass sich die Standardabweichung mit dem aktuellen Rauschen ändert.

Die Schwellenanpassungseinheit ist dafür ausgebildet, den Rauschpegel aus einem Gleichstromanteil des Empfangssignals zu messen. Der hochfrequente Anteil, also insbesondere der empfangene Lichtpuls, wird vorzugsweise zuvor ausgekoppelt, das ist das eigentliche Empfangssignal, das mit der analogen Schwelle verglichen wird. Der verbleibende Gleichstromanteil trägt zu der Messung nicht bei und würde herkömmlich verworfen. Nach dieser Ausführungsform wird der Gleichstromanteil konstruktiv für die Rauschpegelmessung zur Schwellenanpassung genutzt.

Die Schwellenanpassungseinheit ist dafür ausgebildet, den Rauschpegel als Annäherung der Quadratwurzel des Gleichstromanteils des Empfangssignals zu bestimmen. Das für das Rauschen durch Fremdlicht maßgebliche Photon-Schrotrauschen folgt dieser Gesetzmäßigkeit. Daher ist eine entsprechende Schwellenanpassung besonders geeignet.

Die Schwellenanpassungseinheit ist bevorzugt eine Analogschaltung, die insbesondere die Quadratwurzel des Gleichstromanteils bestimmt oder annähert. Das ermöglicht eine ausreichende Schnelligkeit der Anpassung der analogen Schwelle, wie sie insbesondere für einen Laserscanner mit bewegten Lichtstrahl erforderlich ist. Eine digitale Anpassung ist alternativ auch denkbar, aber zu langsam oder jedenfalls in der erforderlichen Schnelligkeit nur mit sehr teuren Komponenten möglich.

Die Analogschaltung weist bevorzugt mindestens eine erste Diode oder eine erste Kaskadenschaltung mehrerer Dioden auf, die eine Schwellenspannung zum Festlegen der analogen Schwelle bereitstellt. Die Strom-Spannungslinie einer Diode ist eine Logarithmusfunktion. Das ist zwar nur eine recht grobe Näherung der eigentlich gewünschten Quadratwurzelbeziehung, kommt dem aber entscheidend näher als die bisherige konstante Schwelle. Durch mehrere Dioden in Kaskadenschaltung, denen parallel geschaltete Widerstände mit gestaffelten Widerstandswerten zugeordnet sind, lässt sich die Annäherung an die Quadratwurzelbeziehung weiter verbessern.

Die Analogschaltung weist vorzugsweise eine zweite Diode oder eine zweite Kaskadenschaltung mehrerer Dioden auf, die eine Kompensationsspannung für die erste Diode oder die erste Kaskadenschaltung bereitstellt. Die Diodenschaltung zum Festlegen der analogen Schwelle wird also doppelt ausgeführt, wobei der eine Teil weiterhin für die eigentliche Festlegung zuständig ist und der zweite Teil lediglich vergleichbaren Einflüssen ausgesetzt werden soll, um diese zu kompensieren.

Die Schwellenanpassungseinheit weist bevorzugt eine Doppeldiode mit einer ersten Diode und einer zweiten Diode auf demselben Träger auf, wobei die erste Diode eine Schwellenspannung zum Festlegen der analogen Schwelle und die zweite Diode eine Kompensationsspannung bereitstellt, die insbesondere von der Schwellenspannung abgezogen wird. In dieser besonders bevorzugten Ausführungsform ist die Analogschaltung zugleich einfach, schnell und ausreichend genau. Die erste Diode liefert durch ihre logarithmische Kennlinie die an eine Quadratwurzelbeziehung angenäherte Schwellenspannung für die analoge Schwelle. Die zweite Diode erzeugt eine Kompensationsspannung, die beispielsweise direkt von der Schwellenspannung abgezogen oder zum Zwecke der Kompensation dem Schwellenvergleicher zugeführt wird. Die beiden Dioden sind vorzugsweise untereinander bau- oder sogar chargengleich und befinden sich in unmittelbarer Nachbarschaft auf demselben Halbleiterchip. Sie haben damit gleiche Eigenschaften, gleiches Alterungsverhalten und sind denselben Temperaturen und sonstigen Umwelteinflüssen ausgesetzt. Daher werden alle diese Veränderungen oder Driften besonders gut und zugleich mit sehr einfachen Mitteln kompensiert. Die Dioden der Doppeldiode sind vorzugsweise wegen der Einfachheit der Schaltung tatsächlich Dioden, können aber auch funktionell als Halbleiterbauteil mit zwei Dioden entsprechenden Eigenschaften verstanden werden. Beispielsweise ist ein Doppeltransistor denkbar, der nur an je zwei Anschlüssen beschaltet wird und somit als Doppeldiode fungiert.

Die erste Diode ist bevorzugt in einem Gleichstrompfad des Lichtempfängers angeordnet, der vor der ersten Diode mit dem Schwellenvergleicher verbunden ist, und/oder die zweite Diode ist in einem zusätzlichen Kompensationspfad angeordnet, der vor der zweiten Diode mit dem Schwellenvergleicher verbunden ist. Wie bereits erläutert, wird vorzugsweise der hochfrequente Anteil des Empfangssignals mit dem empfangenen Lichtpuls ausgekoppelt. Der verbleibende Gleichstromanteil wird in dem Gleichstrompfad zu der ersten Diode geleitet. Vor der ersten Diode wird die Diodenspannung als Schwellenspannung abgegriffen und dem Schwellenvergleicher zugeführt. Die zweite Diode ist Kern eines zusätzlichen Kompensationspfads, der ebenfalls mit dem Schwellenvergleicher, jedoch im Gegensatz zu dem Gleichstrompfad nicht mit dem Lichtempfänger verbunden ist. Die an der zweiten Diode abgegriffene Kompensationsspannung korrigiert die Schwellenspannung der ersten Diode, beispielsweise durch subtraktive Zuführung zu dem Schwellenvergleicher. Die erste Diode ist vorzugsweise bezüglich des Lichtempfängers und Schwellenvergleichers, die zweite Diode bezüglich des Schwellenvergleichers in Durchlassrichtung geschaltet und die jeweilige Diode auf der Gegenseite auf Masse gelegt.

Die Schwellenanpassungseinheit weist bevorzugt eine Stromquelle zum Erzeugen eines von Null verschiedenen Grundstroms im Gleichstrompfad auf. Dadurch fließt im Gleichstrompfad unabhängig vom Rauschpegel stets ein gewisser kleiner Grundstrom. Das sorgt dafür, dass auch ohne Fremdlicht die analoge Schwelle nicht auf Null angepasst wird. Der Grundstrom wird vorteilhaft durch einen entsprechend dem gewünschten Grundstrom dimensionierten Parallelwiderstand zu dem Lichtempfänger erzeugt.

Die Steuer- und Auswertungseinheit ist bevorzugt dafür ausgebildet, mit dem Lichtsender für eine Abstandsmessung wiederholt Lichtpulse für jeweils eine Einzelmessung auszusenden und mehrere Einzelmessungen zu einem gemeinsamen Messwert für den Abstand zu dem Objekt zu verrechnen. Somit arbeitet der Sensor mit einem statistischen Verfahren wie einleitend beschrieben, insbesondere einem Pulsmittelungsverfahren. Eine Einzelmessung bedeutet, dass ein Lichtpuls ausgesandt und wieder empfangen wird. Daraus wird aber noch kein Abstand ermittelt. Erst mehrere dieser Einzelmessungen werden zu einem gemeinsamen Messwert für den Abstand verrechnet. Beispielsweise werden die jeweiligen Empfangssignale der Einzelmessungen mit der analogen Schwelle binarisiert und dann aufakkumuliert, und das entstehende Gesamtsignal wird digital ausgewertet. Dabei erfolgt die erfindungsgemäße Schwellenanpassung bevorzugt schon zwischen den Einzelmessungen beziehungsweise nur einmal für die ersten Einzelmessungen oder die erste Einzelmessung. Damit ist für alle oder zumindest die Mehrheit der Einzelmessungen, die zu einem Abstand beitragen, die analoge Schwelle an das tatsächliche Rauschen am jeweiligen Messort angepasst.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanner;
- Fig. 2: eine Schaltskizze des Empfangspfades mit einer Analogschaltung für eine Schwellenanpassung an den Rauschpegel gemäß einer Ausführungsform;
- Fig. 3: einen Vergleich einer bei Schrotrauschen geltenden Quadratwurzelbeziehung des Schrotrauschens, einer logarithmischen Diodenkennlinie und einer konstanten Beziehung bei fixer Schwelle;
- Fig. 4: einen Vergleich der angepassten Schwellen entsprechend den in Figur 3 gezeigten Gesetzmäßigkeiten;
- Fig. 5: eine Schaltskizze ähnlich Figur 2, nun jedoch mit einer digitalen Schwellenanpassung;
- Fig. 6: eine Schaltskizze ähnlich Figur 2 mit einer Analogschaltung gemäß einer weiteren Ausführungsform;
- Fig. 7: eine Schaltskizze eines Ausschnitts des Empfangspfades zur Erläuterung der Erzeugung eines Grundstroms; und
- Fig. 8: ein Vergleich der angepassten Schwellen ähnlich Figur 4, nun jedoch mit einem Grundstrom gemäß Figur 7.

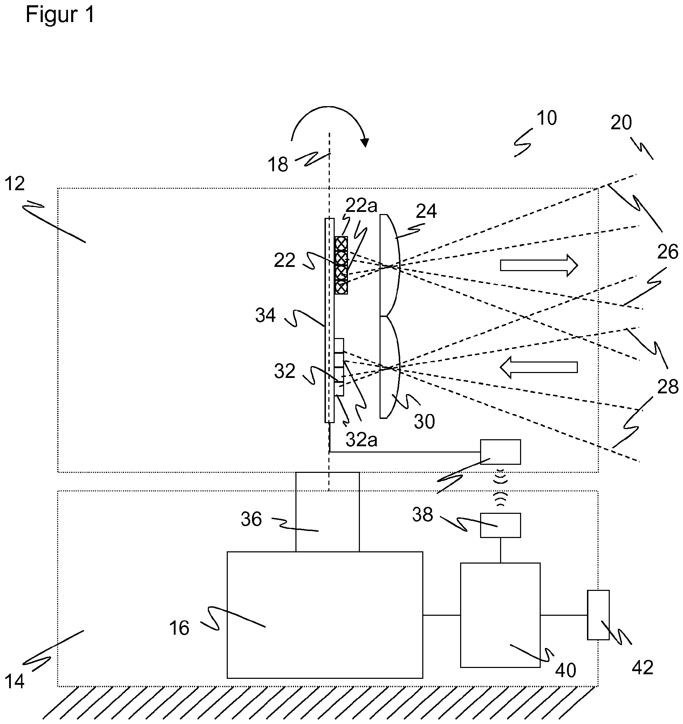

Figur 1 zeigt eine schematische Schnittdarstellung durch einen optoelektronischen Sensor 10 in einer Ausführungsform als Laserscanner. Der Sensor 10 umfasst in grober Aufteilung eine bewegliche Ablenkeinheit 12 und eine Sockeleinheit 14. Die Ablenkeinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Ablenkeinheit 12 in eine Bewegung um eine Drehachse 18 versetzt, um so einen Überwachungsbereich 20 periodisch abzutasten.

In der Ablenkeinheit 12 erzeugt ein Lichtsender 22 mit mehreren Lichtquellen 22a, beispielsweise LEDs oder Laser in Form von Kantenemittern oder VCSELs, mit Hilfe einer gemeinsamen Sendeoptik 24 mehrere Sendelichtstrahlen 26, die in den Überwachungsbereich 20 ausgesandt werden. Die Sendelichtstrahlen 26 weisen einen Lichtpuls auf, womit auch Mehrfachpulse als einfache Strahlcodierung gemeint sein können. Die dargestellten vier Sendelichtstrahlen 26 für vier Abtastebenen sind nur ein Beispiel, eine andere Anzahl von Sendelichtstrahlen 26 ist ebenso möglich. Insbesondere kann der Sensor 10 kein Mehrlagen-, sondern ein Einlagenscanner mit nur einen einzigen, dann vorzugsweise zentral und in Figur 1 horizontal verlaufenden Sendelichtstrahl 26 sein.

Treffen die Sendelichtstrahlen 26 in dem Überwachungsbereich 20 auf ein Objekt, so kehren entsprechende remittierte Lichtstrahlen 28 zu dem Sensor 10 zurück. Die remittierten Lichtstrahlen 28 werden von einer gemeinsamen Empfangsoptik 30 auf einen Lichtempfänger 32 mit mehreren Lichtempfangselementen 32a geführt, die jeweils ein elektrisches Empfangssignal erzeugen. Die Lichtempfangselemente 32a können separate Bauteile oder Pixel einer integrierten Matrixanordnung sein, beispielsweise Photodioden, APDs (Avalanche Diode) oder SPADs (Single-Photon Avalanche Diode). Wie schon zur Sendeseite bemerkt, kann der Sensor 10 abweichend von Figur 1 ein Einlagenscanner mit nur einem Sendelichtstrahl 26 sein. Dann genügt ein Lichtempfangselement 32a, wobei aber auch das Zusammenfassen mehrerer Lichtempfangselemente 32a zu einem Empfangssignal denkbar ist, was besonders bei SPADs mit deren besonderem Totzeitverhalten von Vorteil ist (SiPM, Silicon Photomultiplier).

Lichtsender 22 und Lichtempfänger 32 sind in dieser Ausführungsform gemeinsam auf einer Leiterkarte 34 angeordnet, die auf der Drehachse 18 liegt und mit der Welle 36 des Antriebs 16 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 22 und Lichtempfänger 32 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 38 verbindet die bewegliche Ablenkeinheit 12 mit der ruhenden Sockeleinheit 14. Dort befindet sich eine Steuer- und Auswertungseinheit 40, die zumindest teilweise auch auf der Leiterkarte 34 oder an anderem Ort in der Ablenkeinheit 12 untergebracht sein kann. Insbesondere ist vorstellbar, einen Teil der Auswertung schon im Lichtempfänger 32 unterzubringen, etwa durch eine ASIC-Bauweise (Application-Specific Integrated Circuit). Die Steuer- und Auswertungseinheit 40 steuert den Lichtsender 22 und erhält die Empfangssignale des Lichtempfängers 32 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Ablenkeinheit 12 bestimmt.

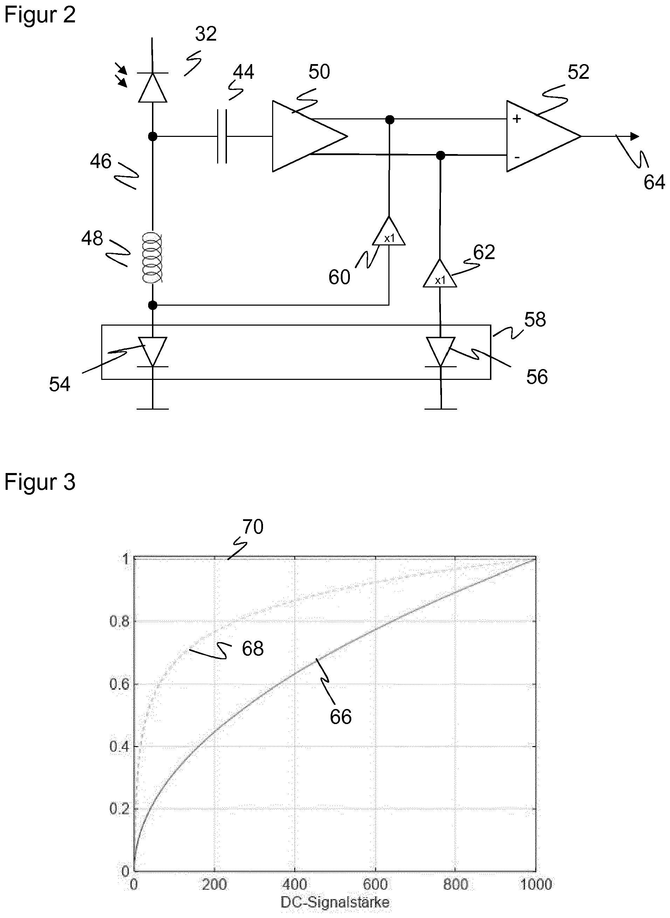

Zur Auswertung wird in einem Einzel- oder Mehrpulsverfahren der Abstand zu einem angetasteten Objekt gemessen. Mehrpulsverfahren bedeutet, dass mehrfach ein Lichtpuls ausgesandt und wieder empfangen wird und ein Abstandswert erst durch zusammenfassende Auswertung der Einzelmessungen erfasst wird. Als Teil der Auswertung wird das Empfangssignal mit einer analogen Schwelle bewertet, um es zu binarisieren beziehungsweise zu digitalisieren oder um anhand von Schwellenübergängen den Empfangszeitpunkt des Lichtpulses zu bestimmen. Die Schwelle ist vorzugsweise eine Spannungsschwelle, da üblicherweise der Photostrom des Lichtempfängers 32 mit einem Transimpedanzverstärker in eine Spannung umgesetzt wird. Später wird unter Bezugnahme auf die Figuren 2 bis 8 eine Anpassung der analogen Schwelle an den Rauschpegel insbesondere durch Fremdlicht erläutert.

Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene, sofern es mehrere Abtastebenen gibt, ist über die Identität des jeweiligen Abtaststrahls 26, 28 ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 42 ausgegeben werden. Die Sensorschnittstelle 42 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie einleitend kurz vorgestellt.

Der dargestellte Sensor 10 ist ein Laserscanner mit rotierendem Messkopf, nämlich der Ablenkeinheit 12. Alternativ ist auch eine periodische Ablenkung mittels Drehspiegel oder einem Facettenspiegelrad denkbar. Eine weitere alternative Ausführungsform schwenkt die Ablenkeinheit 12 hin und her, entweder anstelle der Drehbewegung oder zusätzlich um eine zweite Achse senkrecht zur Drehbewegung, um auch in Elevation eine Abtastbewegung zu erzeugen. Weiterhin kann die Scanbewegung zur Erzeugung der Scanebene stattdessen auch mit anderen bekannten Methoden erzeugt werden, beispielsweise MEMS-Spiegeln, optical phased arrays oder akusto-optischen Modulatoren (Solid State Lidar).

Die nun zu beschreibende Schwellenanpassung eignet sich besonders für einen als Laserscanner ausgebildeten Sensor 10. Dort verändern sich die Fremdlichtbedingungen durch die Scanbewegung der Ablenkeinheit 12 besonders schnell und deutlich von Winkelschritt zu Winkelschritt. Bei einem eindimensionalen entfernungsmessenden Lichttaster beispielsweise, der im Grunde dem Laserscanner ohne die Drehbewegung entspricht, würde auch eine langsamere Anpassung der analogen Schwelle genügen, da sich die Fremdlichtbedingungen nicht so schnell ändern und auch meist nicht die Anforderung besteht, einen neuen Messwert in sehr kurzen Messperioden bereitzustellen. Dennoch ist die nachfolgende Schwellenanpassung auch in anderen Sensoren 10 als einem Laserscanner einsetzbar, insbesondere dem schon genannten eindimensionalen entfernungsmessengen Lichttaster.

Figur 2 zeigt eine vereinfachte Schaltungsdarstellung für den Empfangspfad des Sensors 10 zu Anpassung der analogen Schwelle zur Bewertung des Empfangssignals an einen Rauschpegel. Der Lichtempfänger 32 ist einerseits mit einen Kondensator 44 mit dem eigentlichen Empfangspfad verbunden. Parallel dazu ist ein Gleichstrompfad 46 vorgesehen, der über eine Induktivität 48 angeschlossen ist. In dem eigentlichen Empfangspfad ist zunächst ein Verstärker 50, insbesondere ein Transimpedanzverstärker, und danach ein Komparator 52 für den Schwellenvergleich vorgesehen.

In dem Gleichstrompfad 46 ist eine erste Diode 54 angeschlossen. Sie ist mit einer zweiten Diode 56 auf einem gemeinsamen Halbleiterchip 58 angeordnet. Insgesamt ergibt das eine Doppeldiode Der Abstand zwischen den beiden Dioden 54, 56 ist der Darstellung geschuldet, sie befinden sich vorzugsweise in direkter Nachbarschaft. Die beiden Dioden 54, 56 sind untereinander vorzugsweise bau- oder sogar chargengleich, und sie sind beide in Durchlassrichtung nach Masse geschaltet. Vor der ersten Diode 54 ist eine Verbindung auf einen ersten positiven Eingang des Komparators 52, vor der zweiten Diode 56 auf einen zweiten negativen Eingang des Komparators 52 vorgesehen. In den Verbindungen kann jeweils noch ein Impedanzwandler 60, 62 angeordnet sein.

Für die Pulslaufzeitmessung mit rauschangepasster analoger Schwelle wird aus dem einfallenden Lichtpuls des remittierten Sendelichtstrahls 28 sowie aus dem damit überlagerte Fremdlicht in dem Lichtempfänger 32 ein Photostrom erzeugt. Die Aufteilung über den Kondensator 44 und die Induktivität 48 wirkt als Hochpass beziehungsweise Tiefpass, so dass der Strom des hochfrequenten empfangenen Lichtpulses in den eigentlichen Empfangspass fließt, wo der Strom zunächst in dem Verstärker 50 in ein verstärktes Spannungssignal umgesetzt wird. Dieses Spannungssignal wird dann in dem Komparator 52 mit der analogen Schwelle verglichen. Das Ausgangssignal 64 des Komparators 52 wird dann vorzugsweise digital in der Steuer- und Auswertungseinheit 40 weiterverarbeitet.

Die analoge Schwelle soll >>0 gewählt sein, beispielsweise so, dass das Empfangssignal ohne Lichtpuls, d.h. Fremdlicht allein, höchstens zu 10%, vorzugsweise höchstens zu 1% oder noch weniger für ein Überschreiten der analogen Schwelle sorgt. In einer Ausführungsform fungiert der Komparator 52 als Binarisierer, erzeugt also ein digitales Ausgangssignal 64 mit nur zwei logischen Zuständen Null und Eins, das sich insbesondere für ein statistisches Auswertungsverfahren mehrerer Einzelmessungen oder Pulsmittelungsverfahren eignet. Im Idealzustand ohne Rauschen würde der logische Zustand Eins genau während des Empfangs eines Lichtpulses angenommen. Durch Rauscheffekte kann es auch logische Einsen ohne empfangenen Lichtpuls geben, oder umgekehrt bei einem schwachen Lichtpuls aus großer Entfernung und/oder von einem schwach remittierenden Objekt eine logische Null. Die analoge Schwelle legt fest, wie sich das Rauschen diesbezüglich auswirkt, und sollte möglichst trennscharf zwischen Lichtpulsen und Fremdlicht unterscheiden. Es ist denkbar, mit mehreren Komparatoren zu arbeiten, um mehr logische Zustände im Ausgangssignal 64 zu erhalten. Der Komparator 52 kann aber auch, statt das Ausgangssignal 64 für spätere Auswertungen abzutasten, selbst einen Zeitpunkt bei Schwellenübergängen erzeugen, sei es direkt als TDC (Time-to-Digital Converter) oder indem die Schwellenübergänge nachgelagert ausgewertet werden.

In allen diesen Fällen verbessert eine an den tatsächlichen Rauschpegel angepasste analoge Schwelle das Ergebnis. Das ist Aufgabe des Gleichstrompfads 46 und die Doppeldiode 54, 56. Dort wird der herkömmlich ungenutzte Gleichstromanteil des Empfangssignals gemessen und daraus einerseits von der ersten Diode 54 eine Schwellenspannung an dem positiven Eingang des Komparators 52 und von der zweiten Diode 56 eine Kompensationsspannung zum Ausgleich von Drifteffekten der Diode 54 an dem negativen Eingang des Komparators 52 zur Verfügung gestellt. Die analoge Schwelle wird also abhängig vom Gleichstrom in dem Gleichstrompfad 46 durch die Schwellenspannung entsprechend der aktuellen Situation und Fremdlichtbelastung an dem momentanen Messort oder Abtastpunkt gesetzt und mit der zweiten Diode 56 kompensiert. Die Anpassung ist langsamer als eine typische Lichtpulsdauer von 5 ns, zugleich aber schnell genug für die Abtastbewegung des Sendelichtstrahls beziehungsweise die Messwiederholperiode oder die Winkelschritte eines als Laserscanner ausgebildeten Sensors 10. Dort wird üblicherweise alle 100 µs ein neuer Abstandswert bestimmt, während eine Anpassung der Schwelle bereits nach etwa 1 µs oder noch schneller möglich ist.

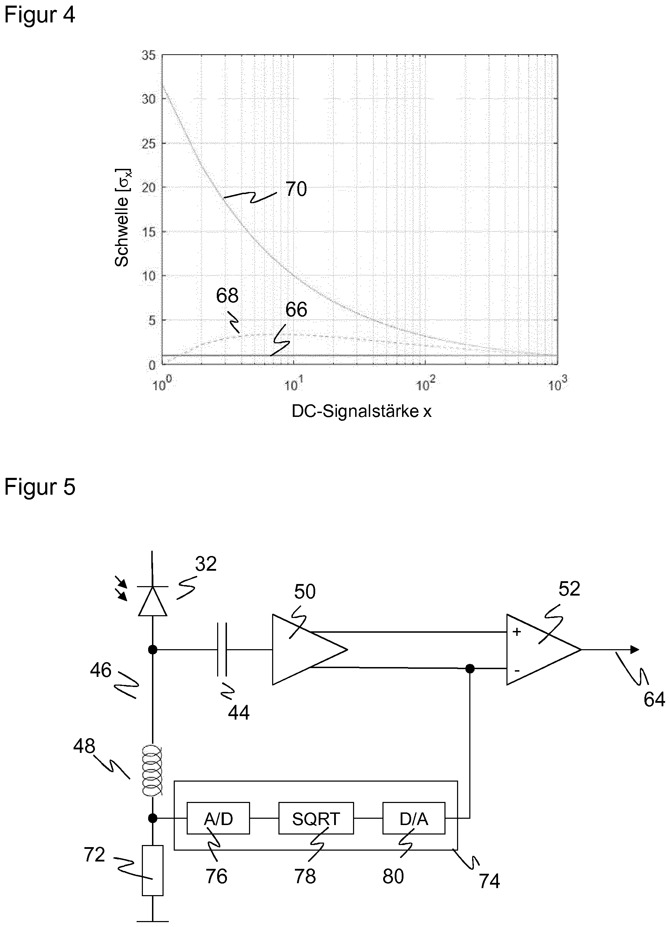

Die Hauptrauschquelle ist das Schrotrauschen von Fremdlicht, das wiederum bis auf Ausnahmesituationen beispielsweise mit Störungen durch andere Sensoren Gleichlicht ist. Das Schrotrauschen lässt sich als Poisson-Prozess beschreiben und durch den gemessenen Gleichstrom quantifizieren. Dafür wäre eine Schwellenspannung besonders geeignet, die der Quadratwurzel des gemessenen Gleichstroms entspricht. Mit der Diode 54 wird immerhin eine logarithmische Beziehung erreicht, die der Quadratwurzel jedenfalls deutlich besser entspricht als eine fixe Schwelle. Das wird später noch unter Bezugnahme auf die Figuren 3 und 4 diskutiert.

In dem Gleichstrompfad 46 fließt hinter der Induktivität 48 der Photostrom in Durchlassrichtung durch die erste Diode 54. Aufgrund der logarithmischen Kennlinie einer Diode wird die an der Diode 54 abfallende Spannung in eine dem Logarithmus des Gleichstroms entsprechende Schwellenspannung umgesetzt. Der Spannungsabfall an der zweiten Diode 56 dient als Kompensationsspannung zum Ausgleich von Schwankungen der Diodeneigenschaften und wird analog-elektrisch von der Schwellenspannung abgezogen. Das ist deshalb eine gute Kompensation, weil diese zweite Diode 56 sich identisch verhält wie die erste Diode 54 und auf dem gemeinsamen Halbleiterchip 58 den gleichen Einflüssen und Driften ausgesetzt ist. Zugleich ist die Schaltung samt Kompensation schnell und einfach.

Anstelle der Doppeldiode 54, 56 sind auch andere Doppel-Halbleiterbauteile vorstellbar, die sich wie eine Diode verhalten. Ein Beispiel ist ein Doppeltransistor, von dem nur je zwei Anschlüsse Diode genutzt werden. Es bleibt dabei aber ein "Halbleiter-Doppel-Bauelement". Ohnehin ist die Schaltung in Figur 2 nur als Übersicht des Schaltungskonzepts gedacht. Sie ist für einen konkreten Sensor 10 korrekt zu dimensionieren, und dabei werden für eine praktische Umsetzung deutlich mehr Elektronikkomponenten hinzukommen.

Figur 3 zeigt zur Illustration einen Vergleich einer Wurzelfunktion 66 entsprechend einer optimal an ein weißes Schrotrauschen angepassten Schwelle, einer Logarithmusfunktion 68 entsprechend einer mit der Doppeldiode 54, 56 angepassten Schwelle und einer konstanten Funktion 70 entsprechend eine fixen Schwelle. Die Funktionen sind jeweils in Abhängigkeit des Gleichstroms über typische drei Dekaden der Amplitude des Gleichstroms gezeigt und für den höchsten Gleichstromwert auf Eins normiert.

Wie schon bemerkt, lässt sich der Fremdlichteinfluss durch Schrotrauschen beschreiben, dass wiederum durch eine zeitliche Poisson-Verteilung modelliert werden kann.

Dann ist die Standardabweichung σ des Fremdlichtstroms zur Quadratwurzel des Fremdlichtstroms proportional. Die Wurzelfunktion 66 eignet sich daher am besten für eine Schwellenanpassung. Es ist aber nicht ohne Weiteres möglich, mit einer analogen Schaltung eine Quadratwurzel zu ziehen. Die Logarithmusfunktion 68 der Diode 54 weist aber immerhin schon eine gewisse Ähnlichkeit auf. Somit ist das Vorwissen über die Fremdlichtprozesse in die Annäherung an die für weißes Schrotrauschen aus Fremdlicht optimale Wurzelfunktion 66 in die Schaltung gemäß Figur 2 eindesignt.

Die Wurzelfunktion 66 und die mit der Schaltung gemäß Figur 2 erreichte Logarithmusfunktion 68 sind natürlich noch nicht identisch. Die daraus abgeleiteten Schwellen sind bei einer Logarithmusfunktion 68 jedenfalls schon viel besser als bei einer konstanten Funktion 70.

Figur 4 zeigt dazu die effektiven Schwellen in Abhängigkeit von dem gemessenen Gleichstrom wiederum für die Fälle der Figur 4. Die Schwellen sind in Einheiten der Wurzel aus dem Gleichstrom angegeben. In dieser Normierung verläuft per Konstruktion die Schwelle aus der Wurzelfunktion 66 auf der X-Achse, denn dies ist der gewählte Bezugspunkt. Die Schwelle aus der Logarithmusfunktion 68, die mit der Schaltung gemäß Figur 2 erreicht werden kann, kommt diesem Bezugspunkt jedenfalls deutlich näher als die Schwelle aus der konstanten Funktion 70. Letztere ist an maximales Rauschen angepasst und daher bei kleinem gemessenen Gleichstrom zunehmend schlechter. Es ist vorteilhaft, die Schaltung gemäß Figur 2 so auszulegen, dass sich die Schwelle aus der angestrebten Wurzelfunktion 66 und die Schwelle aus der tatsächlich erreichen Logarithmusfunktion 68 für die höchste spezifizierte Fremdlichtmenge treffen, so wie das auch in Figur 4 dargestellt ist. Das sind nur Konstanten, die vorab bestimmt und durch Dimensionierung der Schaltungskomponenten übernommen werden können.

Figur 5 zeigt eine weitere Schaltung zum Anpassen der analogen Schwelle. Im Unterschied zu Figur 2 wird die Schwelle hier digital und nicht analog vorgegeben. Die Doppeldiode 54, 56 samt ihrer Anschlüsse ist also durch einen Widerstand 72 und einen digitalen Schwellensetzer 74 ersetzt, der die darüber abfallende Spannung abgreift. Der entsprechende Messwert für den Gleichstrom wird in einem A/D-Wandler 76 digitalisiert, dann von einem digitalen Baustein 78 mit entsprechendem digitalem Verfahren die Wurzel gezogen und das Ergebnis wieder mit einem D/A-Wandler 80 in eine analoge Spannung gewandelt, die dann als Schwellenspannung die analoge Schwelle an dem Komparator 52 setzt. Der digitale Schwellensetzer 74 kann beispielsweise als FPGA implementiert sein, dessen Eingänge und Ausgänge als A/D-Wandler 74 beziehungsweise D/A-Wandler 80 fungieren. Das ist aber im Vergleich zu der Analogschaltung mit der Doppeldiode 54, 56 die komplexere und langsamere Lösung. In einem FPGA mit beispielsweise 100 MHz-Takt verlangt eine Mehrbitwandlung und digitale Berechnung eine gewisse Verarbeitungszeit. Alternativ müssten entsprechend teure, schnellere Digitalkomponenten verwendet werden.

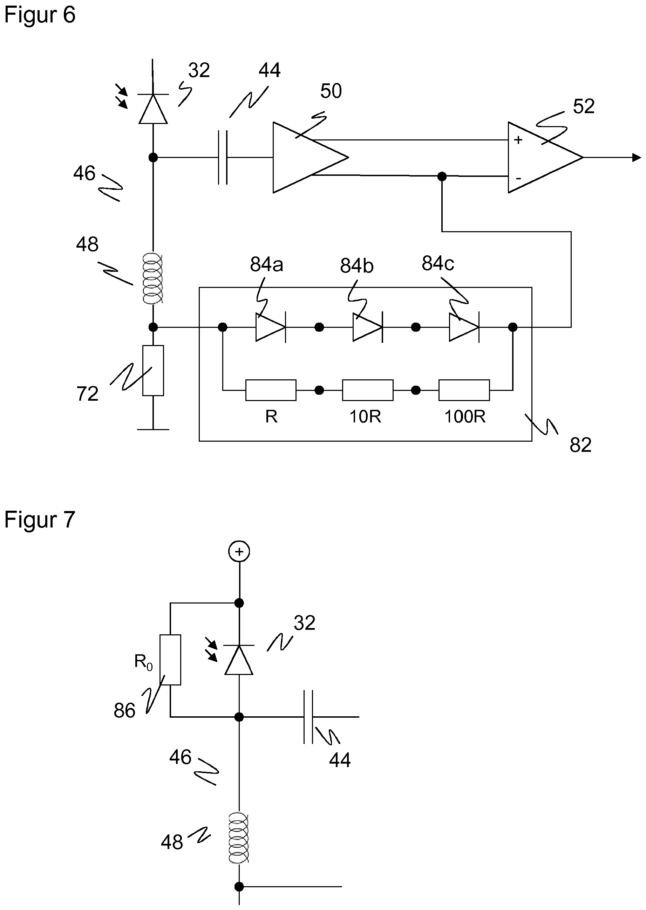

Figur 6 zeigt eine weitere, nun wieder analoge Schaltung zum Anpassen der analogen Schwelle. Im Unterschied zu Figur 2 ist nun anstelle einer Diode 54 mit deren logarithmischer Kennlinie eine Kaskade 82 von mehreren Dioden 84a-c vorgesehen, mit denen eine Wurzelfunktion besser angenähert werden kann. Den Dioden sind parallel jeweilige Widerstände mit gestaffelten Widerstandswerten R, 10R, 100R zugeordnet. Das erzeugt drei zueinander gewichtete Logarithmusfunktionen, die insgesamt eine Wurzelfunktion genauer nachbilden. Kaskaden 82 mit einer anderen Anzahl von Dioden 84a-b und anderen Gewichtungen der Widerstandswerte sind möglich.

Dabei ist zu beachten, dass die zweite Diode 56 in Figur 2 nicht zur Annäherung an die Wurzelfunktion beiträgt, sondern Diodenschwankungen kompensiert. So etwas wäre zusätzlich in Figur 6 denkbar, indem die Kaskade 82 insgesamt gedoppelt und eine analoge Kompensation wie in Figur 2 durchgeführt wird.

Figur 7 zeigt einen Ausschnitt der Schaltungen gemäß Figur 2, 5 oder 6 im Bereich des Lichtempfänger 32. Mit einer zusätzlichen Stromquelle wird hier ein künstlicher Grundstrom oder Offsetstrom in dem Gleichstrompfad 46 erzeugt, der auch ohne Lichteinfall auf den Lichtempfänger 32 fließt. Die zusätzliche Stromquelle kann beispielsweise schaltungstechnisch wie in Figur 7 durch einen Parallelwiderstand 86 zu dem Lichtempfänger 32 umgesetzt werden. Dadurch wird auf den Gleichstrom in dem Gleichstrompfad 46 ein kleiner Gleichstrom als Grundstrom addiert. Der Wert R0 des Parallelwiderstands 86 bestimmt die Höhe des Grundstroms, wobei R0 beispielsweise so ausgelegt ist, dass dessen Stärke 1/1000 des maximal erwarteten Gleichstroms durch Fremdlicht entspricht.

Der Vorteil des Grundstroms besteht darin, dass auch für kleine oder gar verschwindende Photoströme stets eine Mindestschwelle als analoge Schwelle eingestellt wird. Die analoge Schwelle sinkt also nicht auf Null, und das vermeidet insbesondere die Divergenz der Logarithmuskurve in der Nähe von Null.

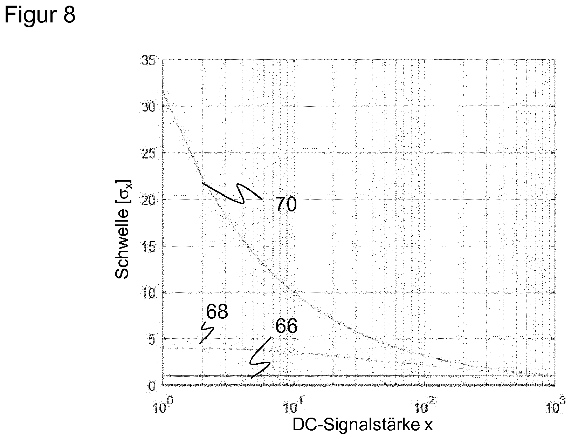

Figur 8 zeigt in einer Darstellung ähnlich Figur 4 den Effekt des Grundstroms auf die aus der Logarithmusfunktion 68 abgeleitete Schwelle. Sie ist für kleine Werte des Gleichstroms angehoben, fällt insbesondere nahe bei Null nicht mehr unter die ideale, aus der Wurzelfunktion 66 abgeleitete Schwelle. Für größere Gleichströme macht sich der Grundstrom kaum noch bemerkbar, und das bei einer Logarithmusfunktion 68 sogar besonders wenig.

Ergänzend zu den gezeigten Schaltungen ist ohne eigene Darstellung möglich, den maximalen Strom, den das Fremdlicht in dem Lichtempfänger 32 erzeugen kann, durch eine analoge Schaltung zu begrenzen. Bei höherer Fremdlichtbelastung wird dann die Versorgungsspannung des Lichtempfängers 32 abgesenkt, und dadurch werden alle Signale abgeschwächt, d.h. sowohl der empfangene Lichtpuls als auch der Gleichstrom durch Fremdlicht. Auf diese Weise kann der Arbeitsbereich der vorgestellten Schaltungen zur Anpassung der Analogschwelle fest begrenzt werden: Minimal fließt gar kein Fremdlichtstrom beziehungsweise in einer Ausführungsform gemäß Figur 7 nur der Grundstrom, und der maximal fließende Strom ist durch die Versorgungsspannungs-Schaltung begrenzt.

## Patentansprüche

1. Optoelektronischer Sensor (10) zur Erfassung und Abstandsbestimmung eines Objekts in einem Überwachungsbereich (20), der einen Lichtsender (22) zum Aussenden von Lichtpulsen (26), einen Lichtempfänger (32) zum Erzeugen eines Empfangssignals aus einem nach Reflexion oder Remission an dem Objekt empfangenen Lichtpuls (28), einen analogen Schwellenvergleicher (52), der das Empfangssignal mit einer analogen Schwelle bewertet, um den empfangenen Lichtpuls zu detektieren, sowie eine Steuer- und Auswertungseinheit (40) aufweist, die dafür ausgebildet ist, die Lichtlaufzeit des Lichtpulses (26, 28) mit Hilfe des mit der analogen Schwelle bewerteten Empfangssignals zu bestimmen, wobei eine Schwellanpassungseinheit (58, 74, 82) vorgesehen ist, die dafür ausgebildet ist, einen Rauschpegel des Empfangssignals zu bestimmen und die analoge Schwelle an den Rauschpegel anzupassen,
**dadurch gekennzeichnet,**
**dass** die Schwellenanpassungseinheit (58, 74, 82) dafür ausgebildet ist, den Rauschpegel als Annäherung (68) der Quadratwurzel (66) eines Gleichstromanteils (46) des Empfangssignals zu bestimmen.

2. Sensor (10) nach Anspruch 1,
der als Laserscanner zur Abtastung des Überwachungsbereichs (20) ausgebildet ist und dafür eine bewegliche Ablenkeinheit (12) zur periodischen Ablenkung der ausgesandten Lichtpulse (26) aufweist.

3. Sensor (10) nach Anspruch 1 oder 2,
wobei die Schwellenanpassungseinheit (58, 74, 82) dafür ausgebildet ist, die analoge Schwelle schneller als eine Messwiederholungsperiode des Sensors anzupassen.

4. Sensor (10) nach einem der vorhergehenden Ansprüche,
wobei die Schwellenanpassungseinheit (58, 74, 82) dafür ausgebildet ist, die analoge Schwelle nach spätestens einigen Mikrosekunden oder spätestens einer Mikrosekunde anzupassen.

5. Sensor (10) nach einem der vorhergehenden Ansprüche,
wobei die Schwellenanpassungseinheit (58, 74, 82) dafür ausgebildet ist, die analoge Schwelle so hoch zu legen, dass das Empfangssignal zu höchstens 10%, insbesondere zu höchstens 5%, 1%, 0,5% oder 0,1% oberhalb der analogen Schwelle liegt.

6. Sensor (10) nach einem der vorhergehenden Ansprüche,
wobei die Schwellenanpassungseinheit (58, 82) eine Analogschaltung ist.

7. Sensor (10) nach einem der vorhergehenden Ansprüche,
wobei die Analogschaltung mindestens eine erste Diode (54) oder eine erste Kaskadenschaltung (82) mehrerer Dioden (84a-c) aufweist, die eine Schwellenspannung zum Festlegen der analogen Schwelle bereitstellt.

8. Sensor (10) nach Anspruch 7,
wobei die Analogschaltung eine zweite Diode (56) oder eine zweite Kaskadenschaltung mehrerer Dioden aufweist, die eine Kompensationsspannung für die erste Diode (54) oder die erste Kaskadenschaltung (82) bereitstellt.

9. Sensor (10) nach einem der vorhergehenden Ansprüche,
wobei die Schwellenanpassungseinheit (58, 74, 82) eine Doppeldiode (58, 54, 56) mit einer ersten Diode (54) und einer zweiten Diode (56) auf demselben Träger (589 aufweist, wobei die erste Diode (54) eine Schwellenspannung zum Festlegen der analogen Schwelle und die zweite Diode (56) eine Kompensationsspannung bereitstellt, die insbesondere von der Schwellenspannung abgezogen wird.

10. Sensor (10) nach Anspruch 9,
wobei die erste Diode (54) in einem Gleichstrompfad (46) des Lichtempfängers (32) angeordnet ist, der vor der ersten Diode (54) mit dem Schwellenvergleicher (52) verbunden ist, und/oder wobei die zweite Diode (56) in einem zusätzlichen Kompensationspfad angeordnet ist, der vor der zweiten Diode (56) mit dem Schwellenvergleicher (52) verbunden ist.

11. Sensor (10) nach einem der vorhergehenden Ansprüche,
wobei die Schwellenanpassungseinheit (58, 74, 82) eine Stromquelle (86) zum Erzeugen eines von Null verschiedenen Grundstroms im Gleichstrompfad (46) aufweist, insbesondere einen Parallelwiderstand (86) zu dem Lichtempfänger (32).

12. Sensor (10) nach einem der vorhergehenden Ansprüche,
wobei die Steuer- und Auswertungseinheit (40) dafür ausgebildet ist, mit dem Lichtsender (22) für eine Abstandsmessung wiederholt Lichtpulse (26) für jeweils eine Einzelmessung auszusenden und mehrere Einzelmessungen zu einem gemeinsamen Messwert für den Abstand zu dem Objekt zu verrechnen.

13. Verfahren zur Erfassung und Abstandsbestimmung eines Objekts in einem Überwachungsbereich (20), wobei ein Lichtpuls (26) ausgesandt, ein Empfangssignal aus einem nach Reflexion oder Remission an dem Objekt empfangenen Lichtpuls (28) erzeugt und das Empfangssignal mit einer analogen Schwelle bewertet wird, um den empfangenen Lichtpuls zu detektieren, wobei die Lichtlaufzeit des Lichtpulses (26, 28) mit Hilfe des mit der analogen Schwelle bewerteten Empfangssignals bestimmt wird,wobei ein Rauschpegel des Empfangssignals bestimmt und die analoge Schwelle an den Rauschpegel angepasst wird,
**dadurch gekennzeichnet,**
**dass** der Rauschpegel als Annäherung (68) der Quadratwurzel (66) eines Gleichstromanteils (46) des Empfangssignals bestimmt wird.

## Claims

1. An optoelectronic sensor (10) for detecting and determining the distance of an object in a monitoring area (20), the sensor (10) comprising a light transmitter (22) for transmitting light pulses (26), a light receiver (32) for generating a received signal from a received light pulse (28) after reflection or remission at the object, an analog threshold comparator (52) which evaluates the received signal with an analog threshold in order to detect the received light pulse, and a control and evaluation unit (40) configured to determine the light time of flight of the light pulse (26, 28) based on the received signal evaluated with the analog threshold, wherein a threshold adaptation unit (58, 74, 82) is provided that is configured to determine a noise level of the received signal and to adapt the analog threshold to the noise level,
**characterized in that** the threshold adaptation unit (58, 74, 82) is configured to determine the noise level as an approximation (68) of the square root (66) of a DC component (46) of the received signal.

2. The sensor (10) according to claim 1,
which is configured as a laser scanner for scanning the monitoring area (20) and comprises a movable deflection unit (12) for periodically deflecting the transmitted light pulses (26).

3. The sensor (10) according to claim 1 or 2,
wherein the threshold adaption unit (58, 74, 82) is configured to adapt the analog threshold faster than a measurement repetition period of the sensor.

4. The sensor (10) according to any of the preceding claims,
wherein the threshold adaption unit (58, 74, 82) is configured to adapt the analog threshold after at most a few microseconds or at most one microsecond.

5. The sensor (10) according to any of the preceding claims,
wherein the threshold adaption unit (58, 74, 82) is configured to set the analog threshold so high that the received signal is at most above the analog threshold with 10%, in particular at most with 5%, 1%, 0.5% or 0.1%.

6. The sensor (10) according to any of the preceding claims,
wherein the threshold adaption unit (58, 82) is an analog circuit.

7. The sensor (10) according to any of the preceding claims,
wherein the analog circuit comprises at least a first diode (54) or a first cascade circuit (82) of a plurality of diodes (84a-c) providing a threshold voltage for setting the analog threshold.

8. The sensor (10) according to claim 7,
wherein the analog circuit comprises a second diode (56) or a second cascade circuit of a plurality of diodes providing a compensation voltage to the first diode (54) or the first cascade circuit (82).

9. The sensor (10) according to any of the preceding claims,
wherein the threshold matching unit (58, 74, 82) comprises a double diode (58, 54, 56) having a first diode (54) and a second diode (56) on the same carrier (58), the first diode (54) providing a threshold voltage for setting the analog threshold and the second diode (56) providing a compensation voltage that in particular is subtracted from the threshold voltage.

10. The sensor (10) according to claim 9,
wherein the first diode (54) is arranged in a DC path (46) of the light receiver (32) which is connected to the threshold comparator (52) upstream the first diode (54), and/or wherein the second diode (56) is arranged in an additional compensation path which is connected to the threshold comparator (52) upstream the second diode (56).

11. The sensor (10) according to any of the preceding claims,
wherein the threshold adaption unit (58, 74, 82) comprises a current source (86) for generating a non-zero base current in the DC path (46), in particular a parallel resistor (86) to the light receiver (32).

12. The sensor (10) according to any of the preceding claims,
wherein the control and evaluation unit (40) is configured, for a distance measurement, to repeatedly transmit light pulses (26) for a respective individual measurement with the light transmitter (22) and to combine a plurality of individual measurements into a common measured value for the distance to the object.

13. A method for detecting and determining the distance of an object in a monitoring area (20), wherein a light pulse (26) is transmitted, a received signal is generated from a received light pulse (28) after reflection or remission at the object, and the received signal is evaluated with an analog threshold in order to detect the received light pulse, wherein the light time of flight of the light pulse (26, 28) is determined by means of the received signal evaluated with the analog threshold, wherein a noise level of the received signal is determined and the analog threshold is adapted to the noise level,
**characterized in that** the noise level is determined as an approximation (68) of the square root (66) of a DC component (46) of the received signal.

## Revendications

1. Capteur optoélectronique (10) pour détecter et déterminer la distance d'un objet dans une zone à surveiller (20), comportant un émetteur de lumière (22) pour émettre des impulsions lumineuses (26), un récepteur de lumière (32) pour générer un signal de réception à partir d'une impulsion lumineuse (28) reçue après réflexion ou réémission sur l'objet, un comparateur à seuil analogique (52) qui évalue le signal de réception avec un seuil analogique afin de détecter l'impulsion lumineuse reçue, et une unité de commande et d'évaluation (40) qui est réalisée pour déterminer le temps de parcours de lumière de l'impulsion lumineuse (26, 28) à l'aide du signal de réception évalué avec le seuil analogique,
dans lequel
il est prévu une unité d'adaptation de seuil (58, 74, 82) qui est réalisée pour déterminer un niveau de bruit du signal de réception et pour adapter le seuil analogique au niveau de bruit,
**caractérisé en ce que**
l'unité d'adaptation de seuil (58, 74, 82) est réalisée pour déterminer le niveau de bruit à titre d'approximation (68) de la racine carrée (66) de la composante de courant continu (46) du signal de réception.

2. Capteur (10) selon la revendication 1,
qui est réalisé sous forme de scanner laser pour balayer la zone à surveiller (20) et qui présente à cet effet une unité de déviation mobile (12) pour dévier périodiquement les impulsions lumineuses émises (26).

3. Capteur (10) selon la revendication 1 ou 2,
dans lequel l'unité d'adaptation de seuil (58, 74, 82) est réalisée pour adapter le seuil analogique plus rapidement qu'une période de répétition de mesure du capteur.

4. Capteur (10) selon l'une des revendications précédentes,
dans lequel l'unité d'adaptation de seuil (58, 74, 82) est réalisée pour adapter le seuil analogique au plus tard après quelques microsecondes ou au plus tard après une microseconde.

5. Capteur (10) selon l'une des revendications précédentes,
dans lequel l'unité d'adaptation de seuil (58, 74, 82) est réalisée pour mettre le seuil analogique si haut que le signal de réception est au plus 10 %, en particulier au plus 5 %, 1 %, 0,5 % ou 0,1 % au-dessus du seuil analogique.

6. Capteur (10) selon l'une des revendications précédentes,
dans lequel l'unité d'adaptation de seuil (58, 74, 82) est un circuit analogique.

7. Capteur (10) selon l'une des revendications précédentes,
dans lequel le circuit analogique comprend au moins une première diode (54) ou un premier circuit en cascade (82) de plusieurs diodes (84a - c) fournissant une tension de seuil pour fixer le seuil analogique.

8. Capteur (10) selon la revendication 7,
dans lequel le circuit analogique comprend une seconde diode (56) ou un second circuit en cascade de plusieurs diodes fournissant une tension de compensation à la première diode (54) ou au premier circuit en cascade (82).

9. Capteur (10) selon l'une des revendications précédentes,
dans lequel l'unité d'adaptation de seuil (58, 74, 82) comprend une double diode (58, 54, 56) ayant une première diode (54) et une seconde diode (56) sur le même support (58), la première diode (54) fournissant une tension de seuil pour fixer le seuil analogique, et la seconde diode (56) fournissant une tension de compensation qui est en particulier soustraite de la tension de seuil.

10. Capteur (10) selon la revendication 9,
dans lequel la première diode (54) est disposée dans un trajet de courant continu (46) du récepteur de lumière (32), qui est relié au comparateur à seuil (52) avant la première diode (54), et/ou
la seconde diode (56) est disposée dans un trajet de compensation supplémentaire qui est relié au comparateur à seuil (52) avant la seconde diode (56).

11. Capteur (10) selon l'une des revendications précédentes,
dans lequel l'unité d'adaptation de seuil (58, 74, 82) comprend une source de courant (86) pour générer un courant de base non nul dans le trajet de courant continu (46), en particulier une résistance parallèle (86) au récepteur de lumière (32).

12. Capteur (10) selon l'une des revendications précédentes,
dans lequel, en vue de mesurer une distance, l'unité de commande et d'évaluation (40) est réalisée pour émettre de manière répétée des impulsions lumineuses (26) pour une mesure individuelle respective au moyen de l'émetteur de lumière (22) et pour prendre en compte plusieurs mesures individuelles afin de calculer une valeur de mesure commune pour la distance à l'objet.

13. Procédé de détection et de détermination de la distance d'un objet dans une zone à surveiller (20), dans lequel une impulsion lumineuse (26) est émise, un signal de réception est généré à partir d'une impulsion lumineuse (28) reçue après réflexion ou réémission sur l'objet, et le signal de réception est évalué avec un seuil analogique afin de détecter l'impulsion lumineuse reçue, le temps de parcours de lumière de l'impulsion lumineuse (26, 28) étant déterminé à l'aide du signal de réception évalué avec le seuil analogique, un niveau de bruit du signal de réception étant déterminé et le seuil analogique étant adapté au niveau de bruit,
**caractérisé en ce que**
le niveau de bruit est déterminé à titre d'approximation (68) de la racine carrée (66) d'une composante de courant continu (46) du signal de réception.
